# EUROPÄISCHE PATENTANMELDUNG

(11) **EP 0 890 773 A2**
(43) Veröffentlichungstag der Anmeldung: **13.01.1999**
(21) Anmeldenummer: 98112102.3
(22) Anmeldetag: 01.07.1998
(51) Int. Cl.: F16L 23/18

(54) **Fluid-Anschlusseinrichtung mit einer O-Ring-Rückhalteeinrichtung sowie Verfahren zur Herstellung einer O-Ring-Rückhalteeinrichtung an einer Fluid-Anschlusseinrichtung**

(30) Priorität: 07.07.1997 DE 19728887
(71) Anmelder: K.K.P. KONSTRUKTIVE KUNSTSTOFF-PRODUKTE HANDELSGESELLSCHAFT mbH, D-97638 Mellrichstadt (DE)
(72) Erfinder: Hölzer, Eberhard A., 97332 Volkach (DE)
(74) Vertreter: Böck, Bernhard, Dipl.-Ing.

(57) **Zusammenfassung**

Anschlußeinrichtung (11) zum Anschluß einer Fluidleitung (16) an ein Fluidleitungssystem mit mindestens einem Verbindungsflansch (10), einem 0-Ring (23) zur Anordnung in einem 0-Ring-Aufnahmeraum (22) einer Dichtfläche (17) des Verbindungsflansches (10) und einer Rückhalteeinrichtung (27) zur Fixierung des 0-Rings (23) im 0-Ring-Aufnahmeraum( 22), wobei die Rückhalteeinrichtung (27) einen Verbindungsteil (26) zur Verbindung mit dem Verbindungsflansch (10) und mindestens ein Rückhalteelement (30) zum Eingriff in den 0-Ring-Aufnahmeraum (22) aufweist, und das Verbindungsteil (26) derart in eine Verbindungsteilaufnahme (25) eingesetzt und mit dem Verbindungsflansch (10) verbunden ist, daß der 0-Ring (23) kraftschlüssig im 0-Ring-Aufnahmeraum (22) gehalten wird.

## Beschreibung

Die vorliegende Erfindung betrifft eine Anschlußeinrichtung zum Anschluß einer Fluidleitung an ein Fluidleitungssystem mit mindestens einem Verbindungsflansch, einem O-Ring zur Anordnung in einem 0-Ring-Aufnahmeraum einer Dichtfläche des Verbindungsflansches und einer Rückhalteeinrichtung zur Fixierung des 0-Rings im 0-Ring-Aufnahmeraum. Des weiteren betrifft die Erfindung ein Verfahren zur Herstellung einer kraftschlüssigen Verbindung eines 0-Rings mit einem Verbindungsflansch einer derartigen Anschlußeinrichtung.

Aus der DE 94 18 509 U1 ist eine Anschlußeinrichtung bekannt, die beispielsweise zur Kühlmittelführung bei Verbrennungskraftmaschinen Verwendung findet, und die in der Dichtfläche eines Verbindungsflanschs eine Nut zur Aufnahme eines O-Rings aufweist, die mit einer Haltelaschen aufweisenden O-Ring-Rückhalteeinrichtung versehen ist. Die bekannte Rückhalteeinrichtung soll dazu dienen, einen O-Ring, der vor der Montage des Kunststoffteils in die O-Ringnut eingelegt wird, gegen Herausfallen aus der Nut zu sichern. Zur Herstellung der die Rückhalteeinrichtung bildenden Haltelaschen wird in der DE 94 18 509 U1 vorgeschlagen, die Haltelaschen nach dem Einlegen des O-Rings mittels einer durch ein Prägewerkzeug ausgeführten Materialverformung des an die Nut angrenzenden Dichtflächenmaterials zu erzeugen. Dies geschieht bei dem bekannten Verfahren durch ein seitliches Wegdrücken des an die Nut angrenzenden Dichtflächenmaterials in Richtung auf die Nut.

Diese Art der vorgeschriebenen Materialverdrängung stellt ein Kaltverformungsverfahren dar, das entsprechend hohe Prägedrücke zur Erzeugung der Haltelaschen erfordert. Aufgrund der hohen Verformungskräfte kann es bei Herstellung der Haltelaschen im Bereich der Dichtfläche zu Flächendeformationen oder auch zur Bildung von Materialrissen im Verformungsbereich kommen. Zwar ist es möglich, mit den vorgenannten Fehlern behaftete Kunststoffteile mittels einer entsprechend definierten Qualitätskontrolle von der Weiterverarbeitung, also beispielsweise dem Einbau in ein Kraftfahrzeug, auszuschließen. Jedoch erfordert die Erkennung derartiger Ausschußteile einen besonderen Aufwand im Bereich der Qualitätskontrolle.

Der vorliegenden Erfindung liegt die Aufgabe zugrunde, eine Anschlußeinrichtung der eingangs genannten Art zu schaffen, die mit einer Rückhalteeinrichtung zur Sicherung des 0-Rings im Verbindungsflansch versehen ist, deren Herstellung ohne wesentliche Materialbeanspruchung des Verbindungsflansches bzw. der Anschlußeinrichtung und auf möglichst einfache Art und Weise durchführbar ist.

Diese Aufgabe wird durch eine Anschlußeinrichtung mit den Merkmalen des Anspruchs 1 bzw. ein Verfahren mit den Merkmalen des Anspruchs 12 gelöst.

Bei der erfindinngsgemäßen Anschlußeinrichtung weist die Rückhalteeinrichtung einen Verbindungsteil zur Verbindung mit dem Verbindungsflansch und mindestens ein Rückhalteelement zum Eingriff in den 0-Ring-Aufnahmeraum auf, wobei das Verbindungsteil derart in eine Verbindungsteilaufnahme eingesetzt und mit dem Verbindungsflansch verbunden ist, so daß der O-Ring kraftschlüssig im 0-Ring-Aufnahmeraum zurückgehalten wird.

Im Unterschied zu der aus der DE 94 18 509 U1 bekannten Rückhalteeinrichtung mit einstückig mit dem Material des Verbindungsflansches ausgebildeten Haltelaschen handelt es sich bei der Rückhalteeinrichtung der erfindungsgemäßen Anschlußeinrichtung um ein separates Bauteil, das, wie der 0-Ring selbst, zu dessen Lagesicherung es dient, unabhängig vom Verbindungsflansch der Anschlußeinrichtung handhabbar ist. Darüber hinaus weist die Rückhalteeinrichtung eine Gestaltung auf, die bei Kombination mit dem Verbindungsflansch die gewünschte Rückhaltefunktion ermöglicht. Diese Kombination erfolgt durch einfaches Einsetzen des Verbindungsteils der Rückhalteeinrichtung in die hierzu im Verbindungsflansch vorgesehene Verbindungsteilaufnahme, wobei sich zwangsläufig aufgrund der Ausgestaltung der Rückhalteeinrichtung ein kraftschlüssiger Kontakt mit dem zuvor in die 0-Ring-Aufnahme eingesetzten 0-Ring ergibt.

Bei Aktivierung der bei der erfindungsgemäßen Anschlußeinrichtung vorgesehenen Rückhalteeinrichtung bleibt demnach das Material bzw. die Materialbeschaffenheit des Verbindungsflansches unbeeinflußt, so daß auch im wesentlichen keine Materialbeanspruchung auftreten kann. Darüber hinaus setzt die Aktivierung der bei der erfindungsgemäßen Anschlußeinrichtung vorgesehenen Rückhalteeinrichtung keine besonderen Werkzeuge oder komplexen Bearbeitungsvorgänge voraus, da die Aktivierung durch einfaches Einsetzen der Rückhalteeinrichtung in den Verbindungsflansch erfolgt.

Als besonders vorteilhaft erweist es sich, wenn die Verbindungsteilaufnahme zur Aufnahme des zumindest teilringförmig ausgebildeten Verbindungsteils der Rückhalteeinrichtung sich zumindest über einen Teilumfang des 0-Ring-Aufnahmeraums erstreckt, da hierdurch ein in besonderer Weise an die ringförmige Gestalt des 0-Rings angepaßte Ausbildung der Rückhalteeinrichtung möglich ist.

Wenn die Verbindungsteilaufnahme zudem konzentrisch zum 0-Ring-Aufnahmeraum ausgebildet ist, wird eine besonders einfache Installation der Rückhalteeinrichtung möglich, da die Rückhalteeinrichtung in beliebiger Drehwinkelstellung - bezogen auf die Mittellinie der an den Verbindungsflansch ansetzenden Fluidleitung - in die Verbindungsteilaufnahme eingesetzt werden kann.

Eine besonders vorteilhafte Vereinfachung hinsichtlich der Ausgestaltung der erfindinngsgemäßen Anschlußeinrichtung ergibt sich, wenn die Verbindungsteilaufnahme und der 0-Ring-Aufnahmeraum ineinander übergehend ausgebildet sind und einen Gesamtaufnahmeraum bilden.

Für die Herstellung der Anschlußeinrichtung, die beispielsweise im Spritzgießverfahren erfolgen kann, erweist es sich als besonders vorteilhaft, wenn der Gesamtaufnahmeraum durch einen Bohrungsabsatz in der Dichtfläche des Verbindungsflansches ausgebildet ist. Eine besonders präzise und dennoch einfache Installation der Rückhalteeinrichtung an der Anschlußeinrichtung wird möglich, wenn der Gesamtaufnahmeraum als abgestufter Bohrungsabsatz mit einem äußeren Ringabsatz zur Abstützung des 0-Rings im 0-Ring-Aufnahmeraum und einem inneren, gegenüber dem äußeren Ringabsatz zurückversetzten Ringabsatz zur Abstützung der Rückhalteinrichtung ausgebildet ist.

Durch eine ringförmige Ausbildung des Verbindungsteils der Rückhalteeinrichtung, die mindestens ein nach außen ragendes Rückhalteelement aufweist, wird eine besonders einfache Installation der Rückhalteeinrichtung ermöglicht, die in gleicher Weise wie die Installation des 0-Rings am Verbindungsflansch erfolgen kann.

Wenn darüber hinaus das Rückhalteelement der Rückhalteeinrichtung als ringförmig am Verbindungsteil umlaufend angeordneter Vorsprung ausgebildet ist, wird eine über den gesamten Umfang des 0-Rings wirksame Rückhaltesicherung zur eindeutigen Lagefixierung des 0-Rings am Verbindungsflansch möglich.

Vorzugsweise sind die Rückhalteeinrichtung und der Verbindungsflansch aus einem Kunststoffmaterial gebildet, wobei in einem besonders zu bevorzugenden Fall das Kunststoffmaterial des Verbindungsflansches und der Rückhalteeinrichtung von identischer Materialbeschaffenheit sind. Zum einen wird durch die Verwendung eines Materials derselben Art bzw. durch die Verwendung identischen Materials eine temperaturabhängige Beeinflussung der Rückhaltewirkung infolge unterschiedlicher Temperaturausdehnungskoeffizienten vermieden. Zum anderen wird somit die Herstellung einer Anschlußeinrichtung möglich, bei der die Rückhalteeinrichtung mit dem Verbindungsflansch verschweißt ist.

Unabhängig von der Materialart des Verbindungsflansches und der Rückhalteeinrichtung erweist es sich in jedem Fall als vorteilhaft, wenn die Anschlußeinrichtung zur Verbindung der Rückhalteeinrichtung mit dem Verbindungsflansch eine Verklebung aufweist.

Unabhängig von der jeweiligen Ausführungsform ermöglicht die erfindungsgemäße Anschlußeinrichtung eine besonders einfache Herstellung, da nach einem Einsetzen des 0-Rings in den 0-Ring-Aufnahmeraum die Rückhalteeinrichtung zunächst mit ihrem Verbindungsteil in die Verbindungsteilaufnahme derart eingesetzt wird, daß die Rückhalteeinrichtung mit ihrem bzw. ihren Rückhalteelement(en) den 0-Ring kraftschlüssig im 0-Ring-Aufnahmeraum hält und anschließend das Verbindungsteil stoffschlüssig mit dem Verbindungsflansch verbunden wird.

Nachfolgend wird eine bevorzugte Ausführungsform der Anschlußeinrichtung unter Erläuterung des Verfahrens zu deren Herstellung anhand der Zeichnungen näher erläutert. Es zeigen:
**Fig. 1** eine Anschlußeinrichtung in Draufsicht auf einen Verbindungsflansch mit einem in einen 0-Ring-Aufnahmeraum des Verbindungsflansches eingelegten 0-Ring;
**Fig. 2** die in **Fig. 1** dargestellte Anschlußeinrichtung in einer Längsschnittdarstellung gemäß Schnittlinienverlauf II - II;
**Fig. 3** eine vergrößerte Darstellung des in **Fig. 2** mit X bezeichneten Bereichs mit einer auf den 0-Ring wirkenden Rückhalteeinrichtung.

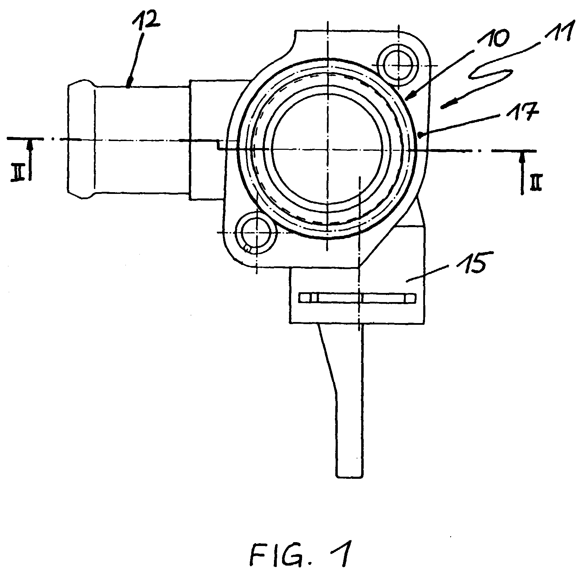

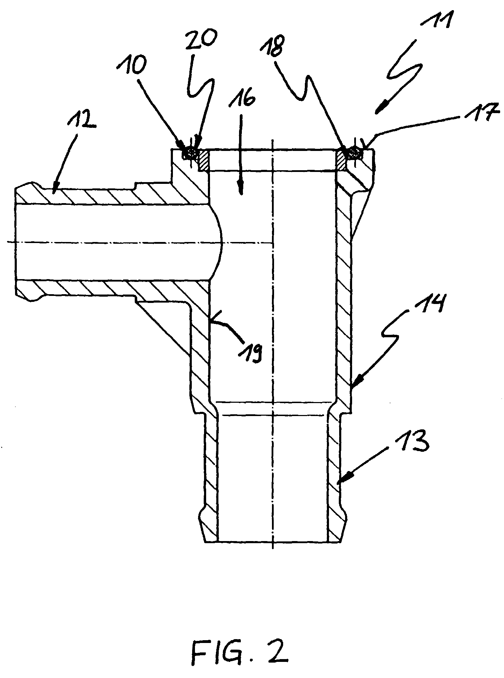

**Fig. 1** zeigt in einer Draufsicht einen Verbindungsflansch 10 einer hier insgesamt aus Kunststoff ausgebildeten Anschlußeinrichtung 11, die in **Fig. 2** in einer Längsschnittdarstellung gezeigt ist. Bei der hier dargestellten Anschlußeinrichtung 11 handelt es sich um ein Anbauteil, wie es beispielsweise zur Fluidverbindung zwischen einem an Verbrennungsmotoren vorgesehenen Kühlmantel und hier nicht näher dargestellten, Schlauchleitungen eines Kühlmittelkreislaufs dient. Hierzu weist die Anschlußeinrichtung 11, wie aus einer Zusammenschau der **Fig. 1** und **2** hervorgeht, zwei Schlauchanschlüsse 12 und 13 auf, die in einem Zylinderteil 14 einmünden. Weiterhin sind Anschlüsse für ein Kühlmittelaggregat vorgesehen, von denen in **Fig 1** lediglich ein Aggregatanschluß 15 dargestellt ist.

Wie aus einer Zusammenschau der **Fig. 1** und **2** ferner hervorgeht, weist der Verbindungsflansch 10 konzentrisch zur Mittellinie einer Fluidbohrung 16 einen zurückversetzt zu einer Dichtfläche 17 des Verbindungsflansch 10 angeordneten abgestuften Bohrungsabsatz 18 auf, der zusammen mit der Ebene der Dichtfläche 17 und der durch eine Bohrungswandung 19 definierten Zylinderoberfläche einen Gesamtaufnahmeraum 20 im Verbindungsflansch 10 definiert.

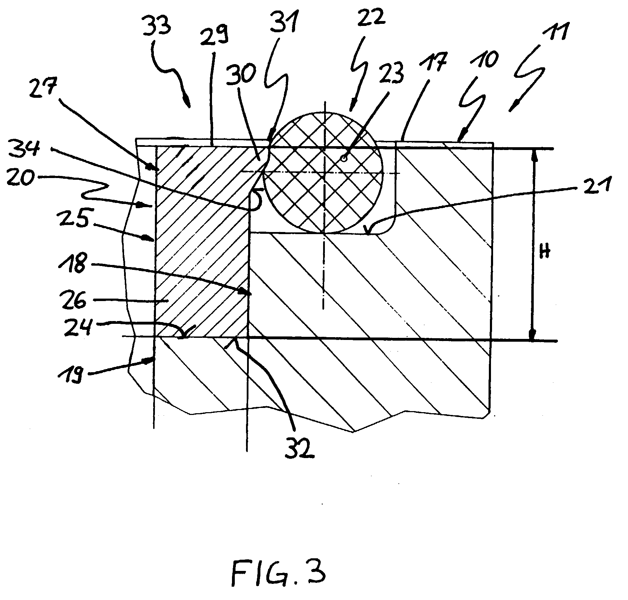

Wie aus **Fig. 3** zu ersehen ist, ist auf einem oberen Ringabsatz 21 des Bohrungsabsatzes 18 in einem 0-Ring-Aufnahmeraum 22 ein 0-Ring 23 angeordnet. Auf einem unterhalb des Ringabsatzes 21 angeordneten Ringabsatz 24, der eine hier ringförmig ausgebildete Verbindungsteilaufnahme 25 begrenzt, ist eine Rückhalteeinrichtung 27 mit ihrem Verbindungsteil 26 angeordnet.

Die hier, wie insbesondere auch aus der **Fig. 1** hervorgeht, ringförmig ausgebildete Rückhalteeinrichtung 27 ist im Bereich ihrer Ringoberfläche 29 mit einem hier nach Art eines Wellenbundes ausgebildeten Ringvorsprung 30 versehen, der, wie in **Fig. 3** dargestellt, als Rückhalteelement auf den 0-Ring 23 wirkt.

Das hier als Ringvorsprung 30 ausgebildete Rückhalteelement dringt in den 0-Ring-Aufnahmeraum 22 ein, so daß beim Einsetzen der Rückhalteeinrichtung 27 mit ihrem Verbindungsteil 26 in die Verbindungsteilaufnahme 25 in Richtung des Pfeils 33 der zuvor in den 0-Ring-Aufnahmeraum 22 eingelegte 0-Ring in einem Kontaktbereich 31 zwischen dem Ringvorsprung 30 und dem 0-Ring 23 elastisch deformiert und somit kraftschlüssig in seiner Lage im 0-Ring-Aufnahmeraum 22 fixiert wird. Dabei wird das Ausmaß der elastischen Deformation im Kontaktbereich 31 durch die Anlage einer dem Ringabsatz 24 gegenüberliegenden Anlagefläche 32 des Verbindungsteils 26 bzw. der Rückhalteeinrichtung 27 begrenzt. Zur Fixierung der Rückhalteeinrichtung 27 in ihrer, in der **Fig. 3** dargestellten Sicherungsposition, in der die Anlagefläche 32 sich in Kontakt mit dem Ringabsatz 24 befindet, kann beispielsweise bei Ausbildung der Rückhalteeinrichtung 27 und des Verbindungsflansches 10 aus einem Kunststoffmaterial eine Ultraschallverschweißung erfolgen. Ebenso kann auch unabhängig von der Art des für die Rückhalteeinrichtung und den Verbindungsflansch verwendeten Materials eine in **Fig. 3** nicht näher dargestellte Klebeschicht zwischen der Anlagefläche 32 der Rückhalteeinrichtung 27 und dem Ringabsatz 24 vorgesehen werden.

Wie **Fig. 3** deutlich zeigt, ist die hier etwa ring- oder hülsenförmig ausgebildete Rückhalteeinrichtung 27 in ihrer Höhe H so bemessen, daß die Dichtfläche 17 in ihrer Wirkung nicht beeinträchtigt wird. Darüber hinaus ist der Ringvorsprung 30 im Übergangsbereich zum Verbindungsteil 26 mit einer Kontaktschräge 34 versehen, die bei einem Einsetzen der Rückhalteeinrichtung 27 in die Verbindungsteilaufnahme 25 in Richtung des Pfeils 33 eine stetig zunehmende und damit für denn 0-Ring 23 material- und oberflächenschonende elastische Deformation bewirkt. Hiermit wird vermieden, daß es infolge der Installation der Rückhalteeinrichtung 27 zu Beschädigungen des 0-Rings 23 kommen kann, die die durch den 0-Ring beabsichtigte Dichtwirkung am Verbindungsflansch 10 beeinträchtigen könnten. Der 0-Ring 23 wird somit durch die Rückhalteeinrichtung 27 nicht nur verliersicher, sondern auch materialschonend im 0-Ring-Aufnahmeraum 22 gehalten.

Natürlich sind auch neben der beispielhaft in den **Fig. 1** bis **3** dargestellten Ausführungsform einer Rückhalteeinrichtung 27 mit einem ringförmig ausgebildeten Verbindungsteil 26 und einem nach Art eines Ringvorsprungs 30 ausgebildeten Rückhalteelement abweichende Ausführungsformen möglich, die die durch die Rückhalteeinrichtung beabsichtigte Funktion erfüllen. So kann das Rückhalteelement beispielsweise nicht wie im vorliegenden Fall kontinuierlich umlaufend, sondern vereinzelt und absatzweise am Verbindungsteil angeordnet ausgebildet sein. Die in de**n Fig. 1** bis **3** dargestellte Ausführungsform weist den besonderen Vorteil auf, daß die gleichmäßige Ringform des 0-Rings 23 auch nach Installation der Rückhalteeinrichtung 27 und Einwirkung des Rückhalteelements 30 der Rückhalteeinrichtung 27 auf den 0-Ring 23 erhalten bleibt.

## Patentansprüche

1. Anschlußeinrichtung zum Anschluß ein Fluidleitung an ein Fluidleitungssystem mit mindestens einem Verbindungsflansch, einem 0-Ring zur Anordnung in einem 0-Ring-Aufnahmeraum einer Dichtfläche des Verbindungsflansches und einer Rückhalteeinrichtung zur Fixierung des 0-Rings im 0-Ring-Aufnahmeraum,
dadurch **gekennzeichnet,**
daß die Rückhalteeinrichtung (27) einen Verbindungsteil (26) zur Verbindung mit dem Verbindungsflansch (10) und mindestens ein Rückhalteelement (30) zum Eingriff in den 0-Ring-Aufnahmeraum (22) aufweist, wobei das Verbindungsteil (26) derart in eine Verbindungsteilaufnahme (25) eingesetzt und mit dem Verbindungsflansch (10) verbunden ist, daß der 0-Ring (23) kraftschlüssig im 0-Ring-Aufnahmeraum (22) gehalten wird.

2. Anschlußeinrichtung nach Anspruch 1,
dadurch **gekennzeichnet,**
daß sich die Verbindungsteilaufnahme (25) zur Aufnahme des zumindest teilringförmig ausgebildeten Verbindungsteils (26) der Rückhalteeinrichtung (27) zumindest über einen Teilumfang des 0-Ring-Aufnahmeraums (22) erstreckt.

3. Anschlußeinrichtung nach Anspruch 1 oder 2,
dadurch **gekennzeichnet,**
daß die Verbindungsteilaufnahme (25) konzentrisch zum 0-Ring-Aufnahmeraum (22) ausgebildet ist.

4. Anschlußeinrichtung nach Anspruch 3,
dadurch **gekennzeichnet,**
daß die Verbindungsteilaufnahme (25) und der 0-Ring-Aufnahmeraum (22) ineinander übergehend ausgebildet sind und einen Gesamtaufnahmeraum (20) bilden.

5. Anschlußeinrichtung nach Anspruch 4,
dadurch **gekennzeichnet,**
daß der Gesamtaufnahmeraum (20) durch einen Bohrungsabsatz (18) in der Dichtfläche (17) des Verbindungsflansches (10) begrenzt wird.

6. Anschlußeinrichtung nach Anspruch 5,
dadurch **gekennzeichnet,**
daß der Gesamtaufnahmeraum (20) als abgestufter Bohrungsabsatz (18) mit einem äußeren Ringabsatz (21) zur Abstützung des 0-Rings (23) im 0-Ring-Aufnahmeraum (22) und einem inneren, gegenüber dem äußeren Ringabsatz (21) zurückversetzten Ringabsatz (24) zur Abstützung der Rückhalteeinrichtung (27) versehen ist.

7. Anschlußeinrichtung nach einem oder mehreren der Ansprüche 3 bis 6,
dadurch **gekennzeichnet,**
daß der Verbindungsteil (26) der Rückhalteeinrichtung (27) ringförmig ausgebildet ist mit mindestens einem nach außen ragenden Rückhalteelement (30).

8. Anschlußeinrichtung nach Anspruch 7,
dadurch **gekennzeichnet,**
daß das Rückhalteelement (30) als ringförmig am Verbindungsteil (26) umlaufend angeordneter Vorsprung ausgebildet ist.

9. Anschlußeinrichtung nach einem oder mehreren der vorangehenden Ansprüche,
dadurch **gekennzeichnet,**
daß die Rückhalteeinrichtung (27) und der Verbindungsflansch (10) aus einem Kunststoffmaterial, vorzugsweise aus demselben Kunststoffmaterial, gebildet sind.

10. Anschlußeinrichtung nach einem oder mehreren der vorangehenden Ansprüche,
dadurch **gekennzeichnet,**
daß der Verbindungsteil (26) der Rückhalteeinrichtung (27) mit dem Verbindungsflansch (10) verklebt ist.

11. Anschlußeinrichtung nach Anspruch 9,
dadurch **gekennzeichnet,**
daß der Verbindungsteil (26) der Rückhalteeinrichtung (27) mit dem Verbindungsflansch (10) verschweißt ist.

12. Verfahren zur Herstellung einer kraftschlüssigen Verbindung eines 0-Rings mit einem Verbindungsflansch einer Anschlußeinrichtung nach einem oder mehreren der vorangehenden Ansprüche,
dadurch **gekennzeichnet,**
daß nach Einsetzen des 0-Rings (23) in den 0-Ring-Aufnahmeraum (22) die Rückhalteeinrichtung (27) mit ihrem Verbindungsteil (26) in die Verbindungsteilaufnahme (25) derart eingesetzt wird, daß die Rückhalteeinrichtung (27) mit ihrem Rückhalteelement (30) den 0-Ring (23) kraftschlüssig im 0-Ring-Aufnahmeraum (22) hält und das Verbindungsteil (26) anschließend stoffschlüssig mit dem Verbindungsflansch (10) verbunden wird.
